# EUROPÄISCHE PATENTSCHRIFT

(11) **EP 0 765 642 B1**
(45) Veröffentlichungstag und Bekanntmachung des Hinweises auf die Patenterteilung: **20.02.2002**
(21) Anmeldenummer: 96109916.5
(22) Anmeldetag: 20.06.1996
(51) Int. Cl.: A61C 17/34, A46B 9/04

(54) **Bürstenteil für eine elektrische Zahnbürste**
Brush element for an electric toothbrush
Tête de brosse pour une brosse à dents électrique

(30) Priorität: 30.09.1995 DE 19536720
(43) Veröffentlichungstag der Anmeldung: 02.04.1997
(73) Patentinhaber: Braun GmbH, Kronberg (DE)
(72) Erfinder: Kressner, Gerhard, 63674 Altenstadt (DE); Herzog, Karl, 60489 Frankfurt (DE)

(56) Entgegenhaltungen:
- DE-A- 2 461 055
- DE-A- 2 652 744
- DE-A- 3 937 850
- DE-U- 8 807 968

## Beschreibung

Die Erfindung betrifft ein Bürstenteil für eine elektrische Zahnbürste mit einem eine Mittellängsachse bildenden Trägerrohr und einem Borstenträger, von dem eine Vielzahl von Borsten abstehen, wobei der Borstenträger um eine Drehachse aus einer Mittelstellung oszillierend drehbar an dem Trägerrohr gelagert, die Drehachse winklig, insbesondere etwa rechtwinklig, zu der Mittellängsachse ausgerichtet ist und wenigstens einige der Borsten die Drehachse unter einem Winkel kreuzen.

Ein derartiges Bürstenteil ist bereits aus der DE 88 07 968 bekannt. Die Borstenbüschel zweier äußerer konzentrischer Borstenbüschelringe sind seitlich auswärts geneigt an dem Borstenträger angeordnet, wobei der innere Borstenbüschelring eine geringere Länge als der äußere Borstenbüschelring besitzt. Des weiteren ist ein zentrisch angeordnetes Borstenbüschel auf dem Borstenträger vorgesehen. Das Bürstenteil wird derart verwendet, daß man das mittige Borstenbüschel gegen einen Zahnzwischenraum stellt, der dann von diesem mittigen oder zentrischen Borstenbüschel sauber gereinigt wird. Die in konzentrischen Kreisringen angeordneten Borstenbüschel laufen gleichzeitig auf den benachbarten Zahnvorderflächen oder Zahnhinterflächen, wobei sich die Borstenbüschel des äußeren Borstenbüschelringes stärker biegen, so daß ihre Stirnfläche gegen die Stirnfläche der inneren Borstenbüschel rückt. Aufgrund der entsprechenden Biegung können die äußeren Borstenbüschel gut in Taschen eingreifen, die sich zwischen dem Zahnfleisch und dem Zahn gebildet haben. Die Borstenbüschel des inneren Borstenbüschelringes begrenzen das Biegen und Knicken der Borstenbüschel des äußeren Borstenbüschelringes und stützen diese zugleich in Umfangsrichtung ab.

Ein weiteres Bürstenteil ist aus der deutschen Offenlegungsschrift DE 39 37 850 A1 bekannt. Dort ist eine elektrische Zahnbürsten beschrieben, die aus einem Griffteil und dem genannten Bürstenteil zusammengesetzt ist. In dem Griffteil sind elektrische Antriebsmittel untergbracht, mit deren Hilfe eine Welle in eine oszillierende Drehbewegung versetzt werden kann. Diese oszillierende Drehbewegung wird über die Welle auf den Borstenträger übertagen, so daß im eingeschalteten Zustand der Borstenträger - ausgehend von der Mitteilungum jeweils etwa 35 Grad hin- und hergedreht wird. Mit der von den freien Enden der Borsten gebildeten Borstenfläche kann ein Benutzer insbesondere Plaque von den freien Zahnflächen und am Zahnfleischrand entfernen.

Des weiteren ist es aus den deutschen Offelegungsschriften DE 31 31 014 A1 und DE 26 52 744 A1 bekannt, bei nicht-elektrischen Zahnbürsten gebogene oder abgewinkelte Borsten zu verwenden.

Aufgabe der Erfindung ist es, die mit einer elektrischen Zahnbürste der eingangs genannten Art erreichbare Zahnreinigung zu verbessern.

Diese Aufgabe wird bei einem Bürstenteil der eingangs genannten Art dadurch erreicht, daß der Borstenträger (5) aus einer Mittelstellung oszillierend drehbar gelagert ist und die die Drehachse kreuzenden Borsten in und/oder gegen die Richtung der Drehbewegung des Borstentägers geneigt in diesem angeordnet sind. Die abgewinkelten Borsten können bei der Zahnreinigung tiefer in die Interdentalräume eindringen. Mit Hilfe des erfindungsgemäßen Bürstenteils ist somit eine intensivere und damit verbesserte Zahnreinigung insbesondere in den Interdentalräumen erreichbar.

Bei einer vorteilhaften Weiterbildung der Erfindung sind die Borsten in der Mittelstellung des Borstenträgers zu der durch die Mittellängsachse gehenden Medianebene des Trägerrohrs hin geneigt. Dadurch wird erreicht, daß immer eine Hälfte der abgewinkelten Borsten bei der oszillierenden Drehbewegung gegen die jeweils momentane Richtung der Drehbewegung gerichtet ist. Dies hat zur Folge, daß die abgewinkelten Borsten besser in die Interdentalräume eindringen und damit die Zahnreinigung verbessert wird.

Bei einer vorteilhaften Weiterbildung der Erfindung sind die Vielzahl von Borsten in zur Drehachse etwa konzentrischen Kreisen auf dem Borstenträger angeordnet und der äußere Kreis ist bzw. äußere Kreise sind mit den Borsten versehen, die die Drehachse unter dem Winkel kreuzen. Der oder die äußeren Kreise mit Borsten dienen somit in besonderem Maße der Reinigung der Interdentalräume, während die übrigen, weiter innen liegenden Borsten zur Reinigung insbesondere der freien Zahnflächen und des Zahnfleischrands vorgesehen sind. Diese Anordnung hat sich in der praktischen Erprobung als besonders vorteilhaft herausgestellt.

Bei einer vorteilhaften Ausgestaltung der Erfindung weisen auf dem äußeren Kreis bzw. den äußeren Kreisen diejenigen Borsten, die in der Mittelstellung des Borstenträgers der durch die Mittellängsachse des Trägerrohrs gehenden Medianebene näher sind, einen größeren Winkel zur Drehachse auf als diejenigen Borsten, die in der Mittelstellung von der Medianebene weiter entfernt sind. Auf diese Weise wird bei der üblichen, etwa tangential zum Zahnbogen liegenden Haltung der elektrischen Zahnbürste während der Zahnreinigung erreicht, daß die Borsten, die in der Mittelstellung der Medianebene am nächsten sind, und die damit eine zu den Interdentalräumen etwa parallel verlaufende Hin- und Herbewegung ausführen, am stärksten abgewinkelt sind. Die anderen Borsten auf dem äußeren Kreis, die in der Mittelstellung von der Medianebene weiter entfernt sind, und die damit eine zu den Interdentalräumen eher quer verlaufende Hin- und Herbewegung ausführen, sind hingegen weniger oder gar nicht abgewinkelt. Sie reinigen den Zahnfleischsaum. Erfindungsgemäß werden also diejenigen Borsten, die insbesondere die Interdentalräume reinigen, besonders stark abgewinkelt, um auf diese Weise die Reinigung dieser Interdentalräume weiter zu verbessern.

Bei einer vorteilhaften Ausgestaltung der Erfindung sind auf dem äußeren Kreis bzw. den äußeren Kreisen die Borsten, die die Drehachse unter dem Winkel kreuzen, so geneigt, daß sie Tangenten an Schraubenlinien bilden, die konzentrisch zur Drehachse liegen. Die abgewinkelten Borsten sind somit in Richtung der Drehbewegung geneigt. Dadurch wird das Eindringen dieser Borsten in die Interdentalräume weiter verbessert.

Bei einer vorteilhaften Weiterbildung der Erfindung ist bei den Borsten, die die Drehachse unter dem Winkel kreuzen, nur das freie Ende der Borsten abgewinkelt, insbesondere etwa das letzte Drittel der Borsten. Dies hat sich in der Praxis als vorteilhafte Alternative zu vollständig abgewinkelten Borsten herausgestellt.

Bei einer vorteilhaften Weiterbildung der Erfindung nimmt der Winkel einen Wert im Bereich von etwa 0 Grad bis etwa 40 Grad ein, insbesondere etwa 8 Grad bis etwa 15 Grad. In der praktischen Erprobung haben sich diese Werte als besonders zweckmäßig erwiesen.

Weitere Merkmale, Vorteile und Anwendungsmöglichkeiten der Erfindung ergeben sich aus der nachfolgenden Beschreibung von Ausführungsbeispielen, die in der Zeichnung näher dargestellt sind. Dabei bilden alle beschriebenen und/oder dargestellten Merkmale für sich oder in beliebiger Kombination den Gegenstand der Erfindung, unabhängig von ihrer Zusammenfassung in den Ansprüchen und deren Rückbeziehung. Es zeigen:
- Fig. 1: eine schematische Darstellung einer ersten Ausführungsform eines Bürstenteils für eine elektrische Zahnbürste in einer Seitenansicht aus der Richtung C der Fig. 2,
- Fig. 2: eine schematische Darstellung des Bürstenteils der Fig. 1 in einer Vorderansicht aus der Richtung A der Fig. 1,
- Fig. 3: eine schematische Darstellung des Bürstenteils der Fig. 1 in einer Draufsicht aus der Richtung B der Fig. 1,
- Fig. 4: eine schematische Darstellung einer Abwicklung der Borsten des äußeren Kreises des Bürstenteils der Fig. 1,
- Fig. 5: eine schematische Darstellung einer Abwicklung der Borsten des äußeren Kreises einer zweiten Ausführungsform eines Bürstenteils für eine elektrische Zahnbürste und
- Fig. 6: eine schematische Darstellung einer Abwicklung der Borsten des äußeren Kreises einer dritten Ausführungsform eines Bürstenteils für eine elektrische Zahnbürste.

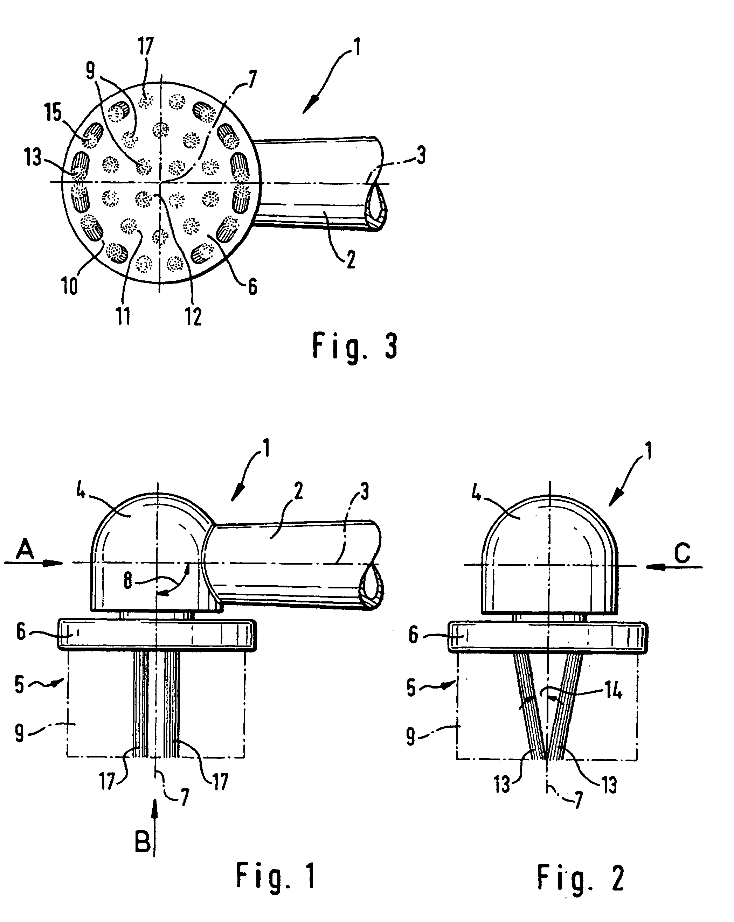

In den Fign. 1 bis 4 ist eine erste Ausführungsform eines Bürstenteils 1 für eine elektrische Zahnbürste gezeigt. Das Bürstenteil 1 kann auf ein Griffteil der elektrischen Zahnbürste aufgesteckt werden. In dem Griffteil sind elektrische Antriebsmittel untergebracht, mit deren Hilfe im eingeschalteten Betriebszustand der elektrischen Zahnbürste eine Welle in eine oszillierende Drehbewegung versetzt wird.

Das Bürstenteil 1 weist ein Trägerrohr 2 auf, das sich in Richtung einer Mittellängsachse 3 erstreckt. Am freien Ende des Trägerrohrs 2 ist eine Schale 4 angebracht, in der ein Borstenträger 5 drehbar gelagert ist. Der Borstenträger 5 weist eine runde, insbesondere kreisförmige Trägerplatte 6 auf, die um eine Drehachse 7 oszillierend drehbar ist. Die Mittellängsachse 3 und die Drehachse 7 schließen einen Winkel 8 von etwa 90 Grad ein.

In dem Trägerrohr 2 und der Schale 4 sind Mittel untergebracht, mit deren Hilfe die von der Welle ausgeführte oszillierende Drehbewegung auf den Borstenträger 5 übertragen werden kann. Im eingeschalteten Betriebszustand der elektrischen Zahnbürste führt daher der Borstenträger 5 eine oszillierende Drehbewegung um die Drehachse 7 aus. Aus einer in den Fign. 1 bis 4 gezeigten Mittelstellung wird der Borstenträger 5 um einen Winkel von etwa +/- 35 Grad hin- und hergedreht.

Von der Trägerplatte 6 stehen eine Vielzahl von Borsten 9 in Form von Borstenbüscheln ab. Die Borsten 9 sind auf zur Drehachse 7 konzentrischen Kreisen angeordnet. So ist ein äußerer Kreis 10 von Borsten 9 vorgesehen, der am Rand der Trägerplatte 6 angeordnet ist. Des weiteren ist ein innenliegender Kreis 11 von Borsten 9 vorgesehen sowie eine Anzahl von Borsten 9 im Zentrum 12 der Trägerplatte 6.

Die Borsten 9 auf dem äußeren Kreis 10 sind in der Mittelstellung des Borstenträgers 5 zur durch die Mittellängsachse 3 gehenden Medianebene des Trägerrohrs 2 hin geneigt. So sind die Borsten 13 des äußeren Kreises 10, die in der Mittelstellung der Medianebene am nächsten sind, in einem Winkel 14 zur Drehachse 7 angeordnet. Die Borsten 15, die von der Medianebene weiter entfernt sind als die Borsten 13, weisen einen Winkel 16 zur Drehachse 7 auf, der etwas kleiner ist als der Winkel 14. Die auf dem äußeren Kreis 10 wiederum weiter entfernt von der Medianebene angeordneten Borsten 9 weisen dann einen Winkel zur Drehachse 7 auf, der wiederum etwas kleiner ist, und so weiter. Die am weitesten von der Medianebene entfernt angeordneten Borsten 17 sind schließlich etwa parallel zur Drehachse 7 ausgerichtet.

Der Winkel 14, 16 der Borsten 13, 15 ist dabei derart angeordnet, daß die Borsten 13, 15 etwa Tangenten an Schraubenlinien bilden, die konzentrisch zur Drehachse 7 liegen. Die Borsten 13, 15 befinden sich dadurch trotz des Winkels 14, 16 innerhalb eines von der Vielzahl der Borsten 9 gebildeten Zylinders.

Der Winkel 14, 16 der Borsten 13, 15 weist einen Wert in einem Bereich von etwa 0 Grad bis etwa 40 Grad auf. Bevorzugt weist der Winkel 14, 16 einen Wert in einem Bereich von etwa 8 Grad bis etwa 15 Grad auf.

Die Borsten 9 auf dem innenliegenden Kreis 11 und im Zentrum 12 des Borstenträgers 5 sind etwa parallel zur Drehachse 7 ausgerichtet.

Es ist möglich, daß nicht nur die Kreise 10, 11 von Borsten 9 vorhanden sind, sondern eine Vielzahl von Kreisen. Es ist ebenfalls möglich, daß nicht nur auf dem äußeren Kreis 10, sondern auch auf dem oder den innenliegenden Kreisen 11 Borsten 9 vorgesehen sind, die wie auf dem äußeren Kreis 10 zur Medianebene hin geneigt sind. Insbesondere ist es möglich, daß - ähnlich wie bei den immer geringer geneigten Borsten 13, 15 auf dem äußeren Kreis 10 - die Neigung der Borsten auf den innenliegenden Kreisen 11 ebenfalls immer geringer wird. Des weiteren ist es möglich, daß die Borsten 9, 13, 15, 17 unterschiedlich lang sind, wobei die Länge von der Neigung der Borsten abhängen kann. Insbesondere ist es möglich, daß die abgewinkelten Borsten 13, 15 länger sind als die zur Drehachse etwa parallelen Borsten 9, 17.

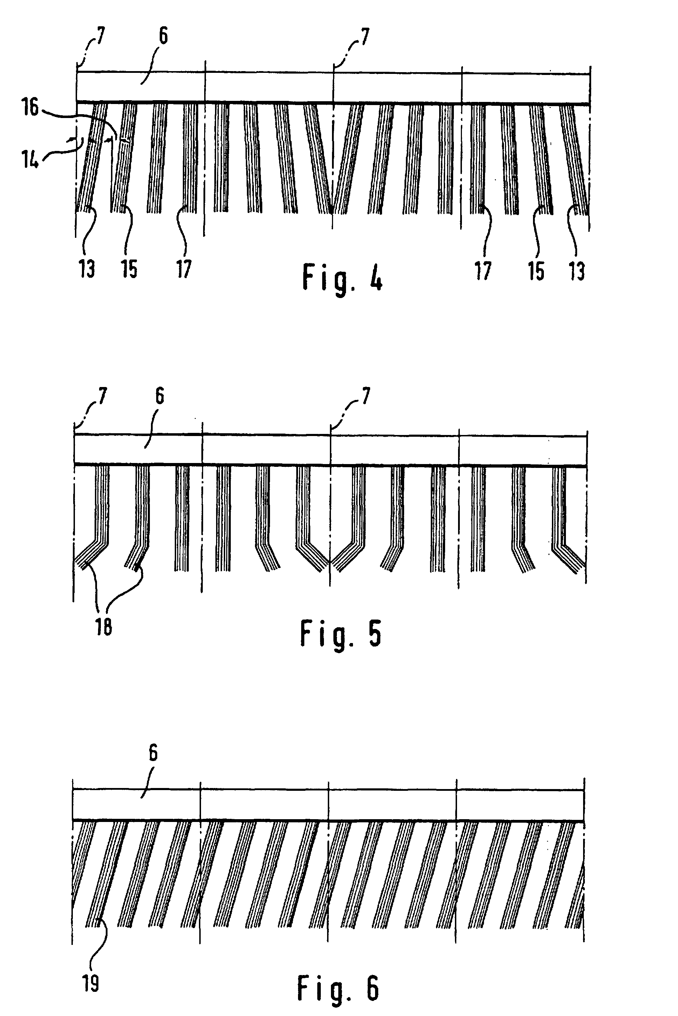

In der Fig. 5 ist eine Abwicklung der Borsten 18 des äußeren Kreises 10 einer zweiten Ausführungsform eines Bürstenteils 1 für eine elektrische Zahnbürste gezeigt. Bei dieser Ausführungsform sind die Borsten 18 im Unterschied zu der Ausführungsform der Fign. 1 bis 4 nicht als Ganzes zur Drehachse 7 gekreuzt, sondern es sind nur die freien Enden der Borsten 18 abgewinkelt. Insbesondere ist etwa das letzte Drittel der Borsten 18 abgewinkelt. Das abgewinkelte Stück der Borsten 18 bildet etwa eine Tangente an eine Schraubenlinie, die konzentrisch zur Drehachse 7 liegt.

In der Fig. 6 ist eine Abwicklung der Borsten 19 des äußeren Kreises 10 einer dritten Ausführungsform eines Bürstenteils 1 für eine elektrische Zahnbürste gezeigt. Bei dieser Ausführungsform sind die Borsten 19 alle in dieselbe Richtung geneigt, und der Winkel der Neigung ist bei allen Borsten 19 gleich. Die Borsten auf dem innenliegenden Kreis 11 können ebenfalls alle in dieselbe Richtung geneigt sein, jedoch entgegengesetzt zu den Borsten 19 des äußeren Kreises 10.

## Patentansprüche

1. Bürstenteil (1) für eine elektrische Zahnbürste mit einem eine Mittellängsachse (3) bildenden Trägerrohr (2) und einem Borstenträger (5), von dem eine Vielzahl von Borsten (9) abstehen, wobei der Borstenträger (5) um eine Drehachse (7) drehbar an dem Trägerrohr (2) gelagert, die Drehachse (7) winklig, insbesondere etwa rechtwinklig, zu der Mittellängsachse (3) ausgerichtet ist und wenigstens einige der Borsten (13, 15) die Drehachse (7) unter einem Winkel (14, 16) kreuzen, wobei **dadurch gekennzeichnet, daß** der Borstenträger (5) aus einer Mittelstellung oszillierend drehbar gelagert ist, die die Drehachse (7) kreuzenden Borsten (13, 15) in und/oder gegen die Richtung der Drehbewegung des Borstenträgers (5) geneigt an diesem angeordnet sind.

2. Bürstenteil (1) nach Patentanspruch 1, **dadurch gekennzeichnet, daß** die Borsten (13, 15) in der Mittelstellung des Borstenträgers (5) zu der durch die Mittellängsachse (3) gehenden Medianebene des Trägerrohrs (2) hin geneigt sind.

3. Bürstenteil (1) nach Patentanspruch 1 oder 2, **dadurch gekennzeichnet, daß** die Vielzahl von Borsten (9) in zur Drehachse (7) etwa konzentrischen Kreisen (10, 11) auf dem Borstenträger (5) angeordnet sind und der äußere Kreis (10) bzw. äußere Kreise mit den Borsten (13, 15) versehen ist/sind, die die Drehachse (7) unter dem Winkel (14, 16) kreuzen.

4. Bürstenteil (1) nach Patentanspruch 3, **dadurch gekennzeichnet, daß** auf dem äußeren Kreis (10) bzw. den äußeren Kreisen diejenigen Borsten (13), die in der Mittelstellung des Borstenträgers (5) der Medianebene des Trägerrohrs (2) näher sind, einen größeren Winkel (14) zur Drrehachse (7) aufweisen als diejenigen Borsten (15), die in der Mittelstellung von der Medianebene weiter entfernt sind.

5. Bürstenteil (1) nach Patentanspruch 3 oder 4, **dadurch gekennzeichnet, daß** auf dem äußeren Kreis (10) bzw. den äußeren Kreisen die Borsten (13, 15), die die Drehachse (7) unter dem Winkel (14, 16) kreuzen, so geneigt sind, daß sie Tangenten an Schraubenlinien bilden, die konzentrisch zur Drehachse (7) liegen.

6. Bürstenteil (1) nach einem der Patentansprüche 1 bis 5, **dadurch gekennzeichnet, daß** bei den Borsten (18), die die Drehachse (7) unter dem Winkel (14, 16) kreuzen, nur das freie Ende der Borsten (18) abgewinkelt ist, insbesondere etwa das letzte Drittel der Borsten (18),

7. Bürstenteil (1) nach einem der Patentansprüche 1 bis 6, **dadurch gekennzeichnet, daß** der Winkel (14, 16) einen Wert im Bereich von etwa 0 Grad bis etwa 40 Grad einnimmt, insbesondere etwa 8 Grad bis etwa 15 Grad.

8. Bürstenteil (1) nach einem der Patentansprüche 1 bis 7, **dadurch gekennzeichnet, daß** alle Borsten (19) des äußeren Kreises (10) bzw. vonäußeren Kreisen in dieselbe Richtung geneigt sind.

9. Bürstenteil (1) nach Patentanspruch 8, **dadurch gekennzeichnet, daß** alle Borsten auf einem innenliegenden Kreis (11) von innenliegenden Kreisen ebenfalls in dieselbe Richtung geneigt sind, jedoch entgegengesetzt zu den Borsten (19) des bzw. der äußeren Kreise.

## Claims

1. A brush section (1) for an electric toothbrush, with a carrier tube (2) forming a central longitudinal axis (3) and a bristle carrier (5) from which a plurality of bristles (9) extend, said bristle carrier (5) being mounted on said carrier tube (2) for rotation about an axis of rotation (7) which is angularly aligned, in particular at about right angles, to the central longitudinal axis (3), and at least some of the bristles (13, 15) intersecting the axis of rotation (7) at an angle (14, 15), **characterized in that** the bristle carrier (5) is mounted for rotational oscillation from a center position, and that those bristles (13, 15) that intersect the axis of rotation (7) are arranged on the bristle carrier (5) in inclined relation thereto in and/or in opposition to the direction of rotation of the bristle carrier (5).

2. The brush section (1) according to patent claim 1, **characterized in that,** with the bristle carrier (5) in the center position, the bristles (13, 15) are inclined toward the median plane of the carrier tube (2), said plane passing through the central longitudinal axis (3).

3. The brush section (1) according to patent claim 1 or 2, **characterized in that** the plurality of bristles (9) are arranged on the bristle carrier (5) in rings (10, 11) approximately concentric with the axis of rotation (7), and that the outer ring (10) or outer rings is/are equipped with those bristles (13, 15) that intersect the axis of rotation (7) at the angle (14, 16).

4. The brush section (1) according to patent claim 3, **characterized in that** those bristles (13) on the outer ring (10) or outer rings that are proximate the median plane of the carrier tube (2) in the center position of the bristle carrier (5) form a larger angle (14) with the axis of rotation (7) than those bristles (15) that are remote from the median plane in the center position.

5. The brush section (1) according to patent claim 3 or 4, **characterized in that** those bristles (13, 15) on the outer ring (10) or outer rings that intersect the axis of rotation (7) at the angle (14, 16) are inclined such as to form tangents to helical lines lying concentrically with the axis of rotation (7).

6. The brush section (1) according to any one of the patents claim 1 to 5, **characterized in that** those bristles (18) which intersect the axis of rotation (7) at the angle (14, 16) have only their free ends angled, in particular about the last third of the bristles (18).

7. The brush section (1) according to any one of the patent claims 1 to 6, **characterized in that** the angle (14, 16) amounts to a value in the range from about 0 degrees to about 40 degrees, in particular from about 8 degrees to about 15 degrees.

8. The brush section (1) according to any one of the patent claims 1 to 7, **characterized in that** all the bristles (19) of the outer ring (10) or outer rings are inclined in the same direction.

9. The brush section (1) according to patent claim 8, **characterized in that** all the bristles disposed on an inner ring (11) of inner rings are equally inclined in the same direction, yet in opposition to the bristles (19) of the outer ring or outer rings.

## Revendications

1. Elément de brosse (1) pour une brosse à dents électrique comportant un tube de support (2) formant un axe médian longitudinal (3) et un support (5) pour les poils, à partir duquel s'étendent une multiplicité de poils (9), et dans lequel le support (5) pour les poils est monté sur le tube de support (2) de manière à pouvoir tourner autour d'un axe de rotation (7), l'axe de rotation (7) est orienté d'une manière anguleuse, notamment approximativement à angle droit, par rapport à l'axe médian longitudinal (3), et au moins quelques-uns des poils (13, 15) croisent l'axe de rotation (7) sous un angle (14, 16), **caractérisé en ce que** le support (5) pour les poils est monté de manière à pouvoir tourner de façon oscillante à partir d'une position centrale, et que les poils (13, 15), qui croisent l'axe de rotation (7), sont disposés sur le support (5) pour les poils en étant inclinés dans et/ou à l'opposé de la direction du mouvement de rotation du support (5) pour les poils.

2. Elément de brosse (1) selon la revendication 1, **caractérisé en ce que**, lorsque le support (5) pour les poils est en position médiane, les poils (13, 15) sont inclinés en direction du plan médian du tube de support (2), qui passe par l'axe médian longitudinal (3).

3. Elément de brosse (1) selon la revendication 1 ou 2, **caractérisé en ce que** la multiplicité de poils (9) sont disposés sur le support (5) pour les poils suivant des cercles (10, 11) approximativement concentriques à l'axe de rotation (7), et que le cercle extérieur (10) ou les cercles extérieurs sont équipés des poils (13, 15), qui croisent l'axe de rotation (7) sous l'angle (14, 16).

4. Elément de brosse (1) selon la revendication 3, **caractérisé en ce que** sur le cercle extérieur (10) ou sur les cercles extérieurs, les poils (13), qui, lorsque le support (5) pour les pils est en position médiane, sont plus proches du plan médian du tube de support (2), font par rapport à l'axe de rotation (7) un angle (14) plus important que les poils (15) qui, dans la position médiane, sont plus éloignés du plan médian.

5. Elément de brosse (1) selon la revendication 3 ou 4, **caractérisé en ce que** sur le cercle extérieur (10) ou sur les cercles extérieurs, les poils (13, 15), qui croisent l'axe de rotation (7) sous l'angle (14, 16), sont inclinés de telle sorte qui sont disposés suivant des tangentes aux lignes hélicoïdales, qui sont concentriques à l'axe de rotation (7).

6. Elément de brosse (1) selon l'une des revendications 1 à 5, **caractérisé en ce que** dans le cas des poils (18) qui croisent l'axe de rotation (7) sous l'angle (14, 15), seule l'extrémité libre des poils (18) est coudée, à savoir notamment par exemple le dernier tiers des poils (18).

7. Elément de brosse (1) selon l'une des revendications 1 à 6, **caractérisé en ce que** l'angle (14, 16) possède une valeur située dans la gamme allant d'environ 0 degré jusqu'à environ 40 degrés, et notamment comprise dans une gamme allant d'environ 8 degrés jusqu'à environ 15 degrés.

8. Elément de brosse (1) selon l'une des revendications 1 à 7, **caractérisé en ce que** tous les poils (19) du cercle extérieur (10) ou de cercles extérieurs sont inclinés dans la même direction.

9. Elément de brosse (1) selon la revendication 8, **caractérisé en ce que** tous les poils sur un cercle intérieur (11) parmi des cercles intérieurs sont inclinés dans la même direction, mais en sens opposé des poils (19) du ou des cercles extérieurs.
